Europäisches Patentamt

European Patent Office

Office européen des brevets

(11) Publication number: **0 271 967**
**A1**

(12) **EUROPEAN PATENT APPLICATION**

(21) Application number: 87202609.1

(22) Date of filing: 27.01.83

(51) Int. Cl.4: **A22C 17/04**

(30) Priority: 08.02.82 NL 8200469
19.03.82 NL 8201159
02.08.82 NL 8203078

(43) Date of publication of application:
**22.06.88 Bulletin 88/25**

(60) Publication number of the earlier application in accordance with Art.76 EPC: **0 086 020**

(84) Designated Contracting States:
**AT BE CH DE FR GB IT LI LU NL SE**

(71) Applicant: **LANGEN RESEARCH B.V.**
**Beversestraat 4**
**NL-5431 SH Cuyk(NL)**

(72) Inventor: **Langen, Johannes Christina**
**56 Jan van Cuijkstraat**
**NL-5431 GC Cuijk(NL)**
Inventor: **Langen, Christianus Petrus**
**11 Zandkampen**
**NL-5431 BB Cuijk(NL)**

(74) Representative: **Hoorweg, Petrus Nicolaas et al**
**OCTROOIBUREAU ARNOLD & SIEDSMA**
**Sweelinckplein 1**
**NL-2517 GK The Hague(NL)**

(54) **Boning device.**

(57) A device for boning pieces of meat such as shoulder or rib pieces, legs of poultry and the like comprising a lower element (52) and an upper element (51) adapted to move away from and towards one another, one of which or both having a cavity for receiving a bone portion (53) and comprising severing means (70) for severing the meat from the bone portion.

Since a bone portion comprises relatively thin and thick parts near the joints it is according to the invention proposed to provide the bottom of one or each cavity with one or more members (60, 61, 62) displaceable in the direction of movement of the mould elements (51, 52) against an elastic force so that matching between the mould cavity and the bone portion is enhanced.

FIG.10

## Boning device

The invention relates to a device for boning pieces of meat such as shoulder or rib pieces, legs or poultry and the like.

This application is a divisional application of the European patent application no. 86020.

The invention has for its object to provide a device by mans of which boning can be mechanically carried out in a very effective manner without damage to the meat to be separated so that the meat structure remains appropriate for further treatment and/or consumption.

The invention consists in a device for boning pieces of meat such as shoulder or rib pieces, legs of poultry and the like comprising a lower element and an upper element adapted to move away from and towards one another, one of which or both having a cavity for receiving a bone portion and comprising severing means for severing the meat from the bone portion.

Since a bone portion comprises relatively thin and thick parts near the joints it is according to the invention proposed to provide the bottom of one or each cavity with one or more members displaceable in the direction of movement of the mould elements against an elastic force so that matching between the mould cavity and the bone portion is enhanced.

Said members may be formed by a plurality of pins movable parallel to one another.

In a further embodiment said members may have the form of stamps.

In a preferred embodiment said members take support on a diaphragm of a chamber filled with high-pressure fluid. In this way the elastic counter-effort can be kept constant during the entire process.

According to a further feature of the invention the cavity may be filled with a deformable mass. The effective operation of the device is achieved in that the meat is not cut but initially pressed outward from the bone and then punched or severed from the bone.

During the approach of the mould elements said mass will gradually nestle around the bone portion whilst pressing away the meat parts. The deformable mass thus prevents crushing of comminution of the bone portion.

Preferably said mass is formed by one or more layers of elastic material, for example, rubber. The layers provide an effective deformation of the mass, since they can shift over the other. According to the invention one or more layers may, if desired be perforated, which enhances the deformability.

In order to reduce the deformability of the mass around the bone portion, the mould cavity has a stepped inner wall, the step being capable of supporting the elastically deformable mass near the edge. In a preffered simple embodiment, a mould element has an edge directed towards the opposite element for severing the meat parts.

The deformable mass may furthermore include one or more additional members which cut across sinews or skins at predetermined places before the meat is pressed away. In this way meat residues remaining on the bone portion are reduced by 30%.

According to a further development of the invention the boning device may be provided with centering means for having the bone in the piece of meat in the correct position before the counter elements are pressed upon each other. In this way even bones having an irregular shape can be punched out without damaging the bone.

Some embodiments of the invention are described hereinafter with reference to the accompanying drawings.

The drawing shows in:

Fig. 1 a perspective plan view of a boning device in one embodiment of the invention,

Fig. 2 a plan view of a piece of meat to be boned,

Fig. 3 a cross-sectional view taken on the line III-III of the piece of meat of fig. 2,

Fig. 4 a plan view of a cutting element embodying the invention suitable for use in the device shown in fig. 1,

Fig. 5 a sectional view taken on the line V-V in fig. 4,

Fig. 6 a sectional view like fig. 5 of the cutting elements filled with a piece of meat to be worked,

Fig. 7 an enlarged sectional view like fig. 5 of a detail of the cutting edge,

Fig. 8 a vertical view of a mould in a second embodiment of the invention,

Fig. 9 a plan view of the lower mould of fig.8

Fig. 10 a vertical sectional view like fig. 8 of a third embodiment,

Fig. 11 a plan view of the lower mould in fig. 10,

Fig. 12 a plan view of an alternative embodiment of the lower mould,

Fig. 13 a sectional view like fig. 8 of an embodiment having an additional cutting member,

Figs. 14 and 15 a perspective view and a side elevation respectively of the cutting member,

Fig. 16 a perspective view of a gripping element embodying the invention.

Fig. 17 a perspective plan view of an further embodiment of the invention including centering means.

Fig. 18 and 19 both elevational side views of the embodiment according to fig. 17, each showing the centering means in a retracted and protruding position of said centering means respectively.

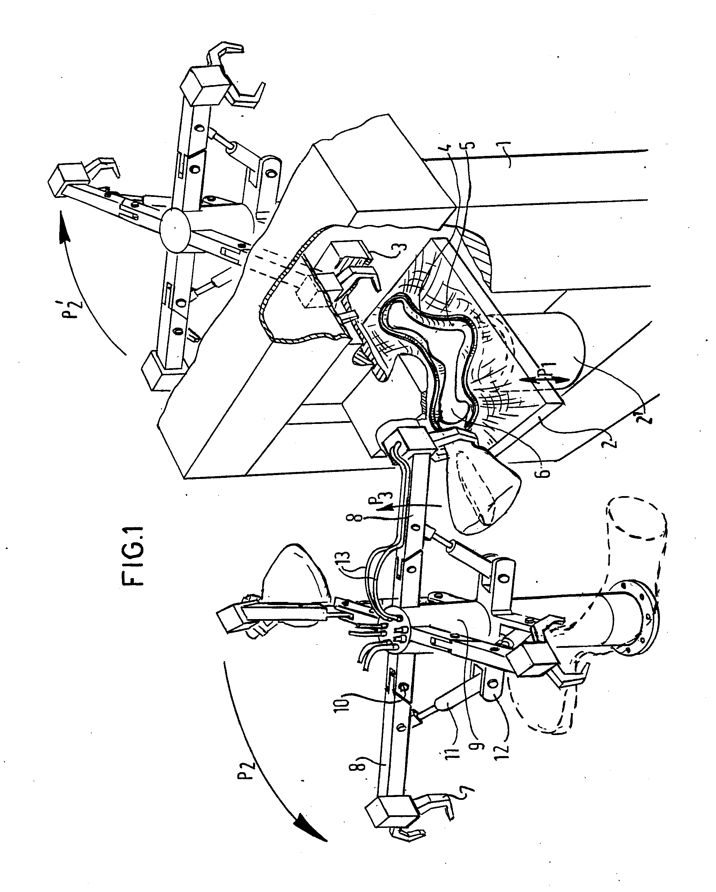

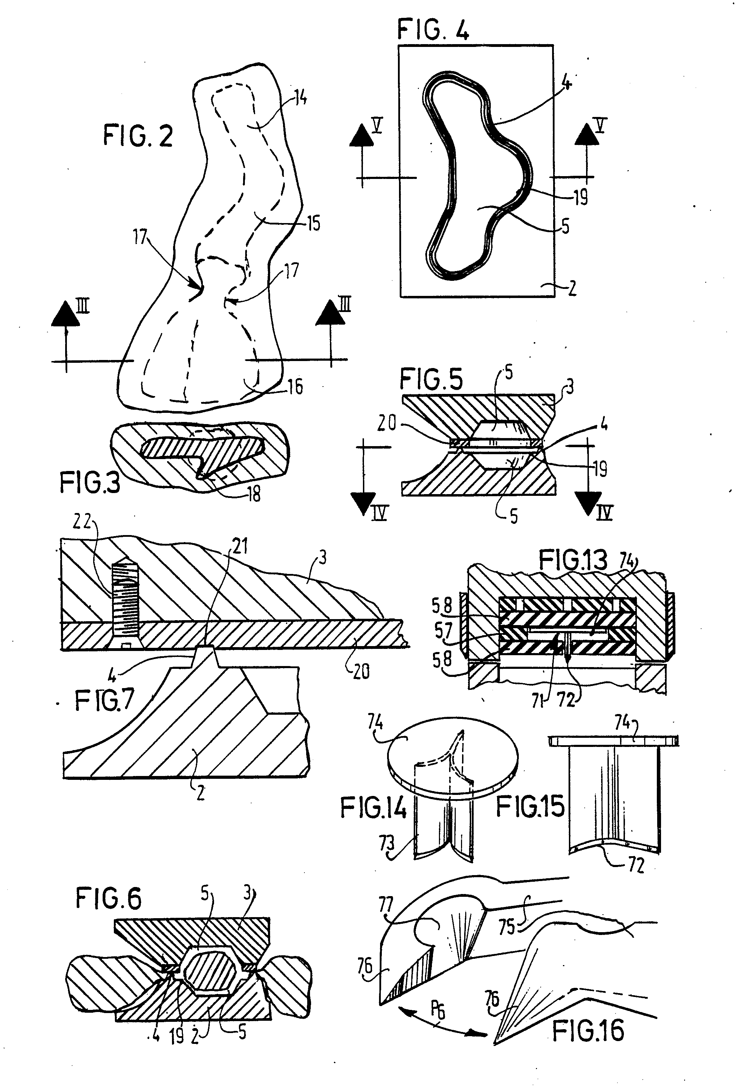

Reference numeral 1 in Fig. 1 designates the frame, which may be constructed in any appropriate manner provided it has adequate strength and rigidity for absorbing the cutting efforts occurring when the pieces of meat are boned.

According the the invention the device is provided with a cutting element 2, which in the embodiment shown takes support on the cylinder 2' so that the cutting element can move up and down in the direction of the arrow P1. The cylinder 2' may be a hydraulic or pneumatic ram or, if desired, be replaced by other moving means.

Rigidly secured in the frame 1, above the cutting element 2, is provided a stationary counter-element 3 parts of which are broken away to more clearly show the cutting element 2; the shape essentially corresponds with that of the cutting element 2. The counter-element 3 may be fastened in the frAme 1 also in any appropriate manner provoded the cutting efforts can be absorbed.

In accordance with one aspect of the invention the cutting element 2 has a cutting edge 4, which will be described in detail with reference to the further figures. The counter-element is provided with a deformable counterplate, which will also be described in detail hereinafter.

The cutting element 2 furthermore has a recess 5 within the cutting edge 4 for receiving a bone portion schematically designated by 6 in fig. 1.

The device furthermore comprises gripping members 7, every four of which are united in a group in order to permit of stepwise working successive pieces of meat. Each gripping member 7 is arranged on an arm 8, said arm being fastened to a rotatable, vertical spindle 9. Each arm is furthermore provided with a hinge 10 and the movable, outer part of the arm 8 is coupled with a pressure ram 11, which takes support on a support 12 of the spindle 9. The gripping member 7 comprises two opposing fingers which are hydraulically actuated through ducts 13 in a manner such that each bone portion can be gripped and released respectively.

The device depicted above will be discussed with reference to a piece of meat to be worked, in this case a shoulder piece shown in detail in figs. 2 and 3. The shoulder piece comprises in this case two relatively pivotable bone portions 14 and 15, the shoulder blade 16 adjoining the free end of the bone portion 15. As compared with the bones 14 and 15 the shoulder blade has a relatively flat shape. Moreover, directly near the bone portion 15 the shoulder blade has a recess 17, which is used in the present device for applying the gripping members 7. The operator of the device shown in fig. 1 feeds each piece of meat as shown in fig. 2 to the open gripping member 7 so that the closed gripping member 7 enters the recess 17. The operator may previously have made an incision in the meat on the shoulder blade. Care is taken for the ridge of the blade to point downwards.

By turning the arms 8 around the spindle 9 in the direction of the arrow P2 the piece of meat arrives above the cutting element 2 so that by actuating the ram 3 the meat is cut away from the bone portions, since the cutting edge 4 comes into contact with the counter-element 3, which will be described in further detail hereinafter. The machine is furthermore programmed so that directly before the definite cut of the mass of meat around the bone portions the arm 8 is urged upwards by the ram 11 in the direction of the arrow P3, as a result of which the shoulder blade is torn away from the meat, which does not give rise to problems since the ridge 18 is pointing downwards.

After the mass of meat is completely cut, the undamaged residual meat is collected and removed, after which the bone portion can be removed from the cutting edge 4 by moving the cutting element 2 downwards. By a further turn of the arms 8, the fingers 7 of the gripping member being released, the shoulder blade is conducted away by gravity. In the meantime the other gripping members 7 have received pieces of meat, which are fed one by one to the cutting element 2.

Owing to a symmetrical design of the cutting edge 4 the cutting element 2 can deal with pieces of meat of the left-or right-hand side of the animal, as the case may be. In this manner a corresponding group of gripping members 7 on the other side of the frame 1 can handle symmetrical pieces of meat.

The cutting operation proper will now be described in further detail with reference fo figs. 4 to 7.

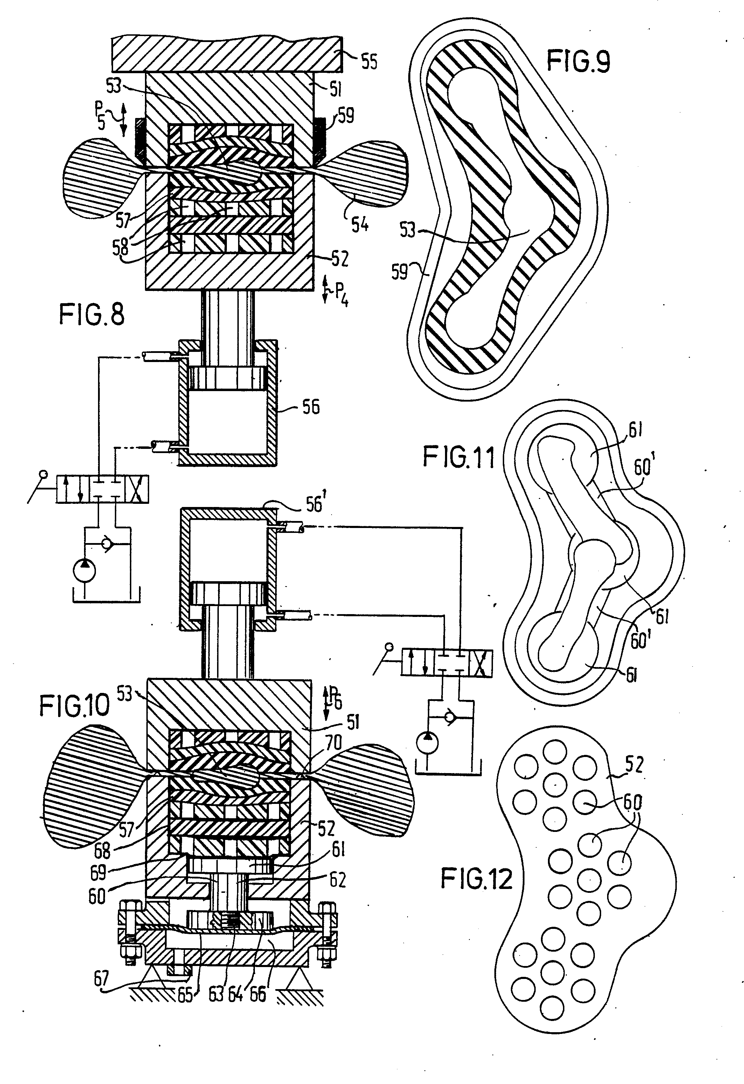

Fig. 4 is a plan view of the cutting element 2, in which, however, as an alternative the cutting edge 4 may be suitable for boning a complete piece of meat including a shoulder blade. The circumferential shape of the cutting edge 4 substantially corresponds to the form of the bone in the piece of meat. Inside the cutting edge 4 a recess 5 is provided, the contour line 19 of which is located at a given distance from the cutting edge 4 (see also fig. 5). The counter-element 3 has a similar recess 5 and has furthermore a counterplate 20 made from a permanently deformable or ductile material, for example, stainless steel. The detail of fig. 7 illustrates the advantage of this embodiment, that is to say, at the first load between the cutting element 2 and the counter-element 3 the cutting edge 4 presses a permanent groove 21 in the plate 20. The groove and the edge 4 exert the desired cutting effect on the meat. The plate 20 may be replaceable by means of bolts 22. In this manner a cutting device can be obtained which is cheap and readily repairable.

Fig. 6 clearly shows that when a piece of meat is arranged between the elements 2 and 3 the bone portion is substantially completely embraced by the over-all volume of the recesses 5, there remaining only space for the sinews and films extending along the bone and being initially moved outwards with the meat upon compression, but being left in the space between the contour line 19 and the cutting edge 4. The meat itself outside the cutting edge 4 is cut off in substantially non-deformed shape and collected.

The device shown in figs. 8 and 9 essentially comprises an upper element 51 and a lower element 52 having a cavity for receiving a bone portion 53 of a piece of meat 54. This piece of meat may be the shoulder of a pig.

Referring to fig. 8 the upper element 51 is stationarily arranged in a frame 55, which need not be described in detail. The lower element 52 can be moved up and down in the direction of the arrow P4 by means of a ram 56.

The cavity of each mould element 51, 52 is filled with a deformable mass, in this case in the form of layers 57 of elastic material, for example, rubber. The layers may be partly provided with perforations 58, so that the deformability in the horizontal sense in fig. 8 is enhanced.

Closely around the upper element 51 is arranged a profile knive strip 59, which is movable up and down in the direction of the arrow P5 by means of driving means (not shown).

The device shown in figs. 8 and 9 operates as follows.

After the lower element 52 has been sufficiently lowered by means of the ram 56 a piece of meat can be arranged between the mould elements for example manually or mechanically. The bone portion has a V-shaped form in this case (see fig. 9) and, viewed on plan, the cavities in the moulds also have the shape of a V. The bone portion 54 is arranged approximately midway between the moulds. After the ram 56 is actuated the lower element 52 is moved upwards so that the meat on the underside of the bone portion 53 is pressed outwards in the gap-shaped space between the upper and lower elements 51, 52. At the approach of the bone portion the upper layers 57, initially being in the stretched state, will come into contact with the thickest parts of the bone portion 53 is subsequently nestle around the bone portion (see the situation shown in fig.8). After the meat has been completely pressed away through the gap between the elements, the cutting strip 59 is moved downwards so that the piece of meat is cut off. After the mould is opened, the bone portion can be removed. The meat is conducted away in an appropriate manner. It will be obvious that in this embodiment the layers will deform top to bottom in the lower mould element, which is enabled by the nature of the material and the perforations.

The embodiment of fig. 10 differs from the embodiment of fig. 8 described above in that the lower mould element is supported in the frame and the upper mould element can be moved up and down in the direction of the arrow P6 by means of the ram 56'.

The cavity in the elements 51, 52 is filled with layers of elastic material and in the bottom of the lower mould element 52 is disposed a member 60, which is movable in the direction of the arrow P6 and which exhibits the shape of a stamp. The member 60 is provided with a circular stamp part 61 fastened to a shaft 62. The lower end of the shaft 62 has a screwthread 63, onto which is screwed a foot part 64. The foot part 64 rests on a diaphragm 65 of a pressure chamber 66, which may be filled with a pressure fluid via the connecting stub 67.

The inner wall 68 of the cavity in the lower mould element 52 has a step at 69; it should be noted that in the unloaded state the top surface of the stamp 61 matches the top surface of the step 69.

The operation of the device shown in fig. 10 is substantially similar to that of fig. 8, but when the meat is pressed away not only the layers 57 are deformed but also the stamp 60 is urged downwards against the effect of the elastic force of the pressure fluid in the pressure chamber 66. Thus a constant counter-force is ensured, whilst sufficient space is left for the bone portion 53 so that damage is minimized. Owing to the step 69 the edge of the layers 57 around the bone portion is less deformable so that the meat is effectively pressed outwards in the gap between the elements 51, 52. The meat is cut off by a cutting edge 70 provided on the lower element 52, co-operating with the lower edge of the upper element 51.

Fig. 11 and 12 show a few embodiments of members 60, adapted to move up and down; fig. 11 shows three stamp-shaped members, between which filling members 60' in the form of staight strips are arranged. Like the stamp members 61 the filling members are supported on the diaphragm 65. When loaded, these members 60' will, however, be urged away to a lesser extent since the bone is locally thinner.

Fig. 12 shows the bottom of an element 52 provided with pin-shaped members 60, which are slidable in matching recesses in the bottom of the mould element 52 and which rest on the underside on a diaphragm 65 as shown in fig. 10. In this manner optimum adaption of the mould bottom to the shape of the bone is obtained.

The invention is not limited to the embodiments described in the foregoing. For example, the elastic layers 57 may be replaced by a single, elastic element; it may be imagined to use a bladder filled with a pressure fluid and filling out the cavity of the element 51, 52.

Moreover instead of being formed by fluid supported stamps the yielding members 60 may be formed by spring elements, for example, cup springs capable of producing a substantially constant force along the path of depression.

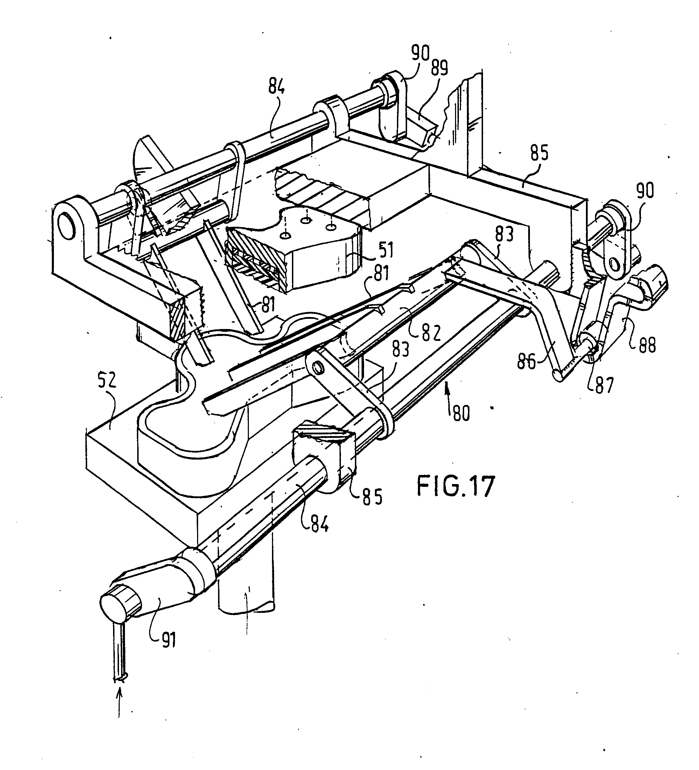

Fig. 13 shows that a cutting member 71 is included in the deformable mass. In the rest position the cutting edge will just lie below the deformable mass or it will not do so, but at the approach of the lower and upper elements the cutting edge will cut the subjacent meat, sinews and/or films before the meat is pressed away. The cutting member is preferably formed by a standing strip 73, which has in this case (fig. 14) the shape of an Y, but obviously it may have anyy desirable shape. The strip is fastened to a supporting plate 74 arranged between the layers 57 and 58. The cutting edge has a curved shape (see fig. 15). The number and place of the cutting members 71 are at random.

Fig. 16 shows an embodiment of gripping members 75, which furthermore have a punctiform end 76 to facilitate penetration into the meat. Behind the punctiform end of the left-hand part a recess 77 is provided for readily receiving the bone portion to be gripped. In this way fracture of the bone is avoided, since it can change its direction. The opposing parts 75 of the gripping members can move to and fro in the direction of the arrow P6.

In the embodiment according to fig. 17, 18 and 19 the cutting device is provided with centering means 80, which has for its object to place the bone in the meat piece exactly in the center line of the mould, for instance according to the position of the bone as showed in fig. 11.

Said centering means are here formed like arms 81, which are parallel to eachother, whereas one end of which are fastened to a rod 82 pivotably arranged in between a pair of levers 83 secured to a driving shaft 84. Said driving shaft is journalled in a frame part 85 secured to the upper mould 51 of the boning device.

The rod 82 is further provided with a bracket 86, the free end of which is provided with a roller 87. The roller is guided in a cam-track 88, part of the frame 85.

At the opposite side of the mould 51 a similar structure is provided in order to create a pair of opposite arms 81, the free ends of which are pointed to the lower mould 52.

Those groups of centering arms 81 are movable simultaneously into the space in between the upper and lower mould and are to be protected therefrom. The simultaneous movement is achieved by a linkage 89 pivotably journalled unto crank arms 90 on both driving shafts 84 of the opposite centering arms.

One of the shafts 84 is provided with a crank arm 91 to which any suitable driving means can be connected.

The working of the centering means as described hereabove is as follows:

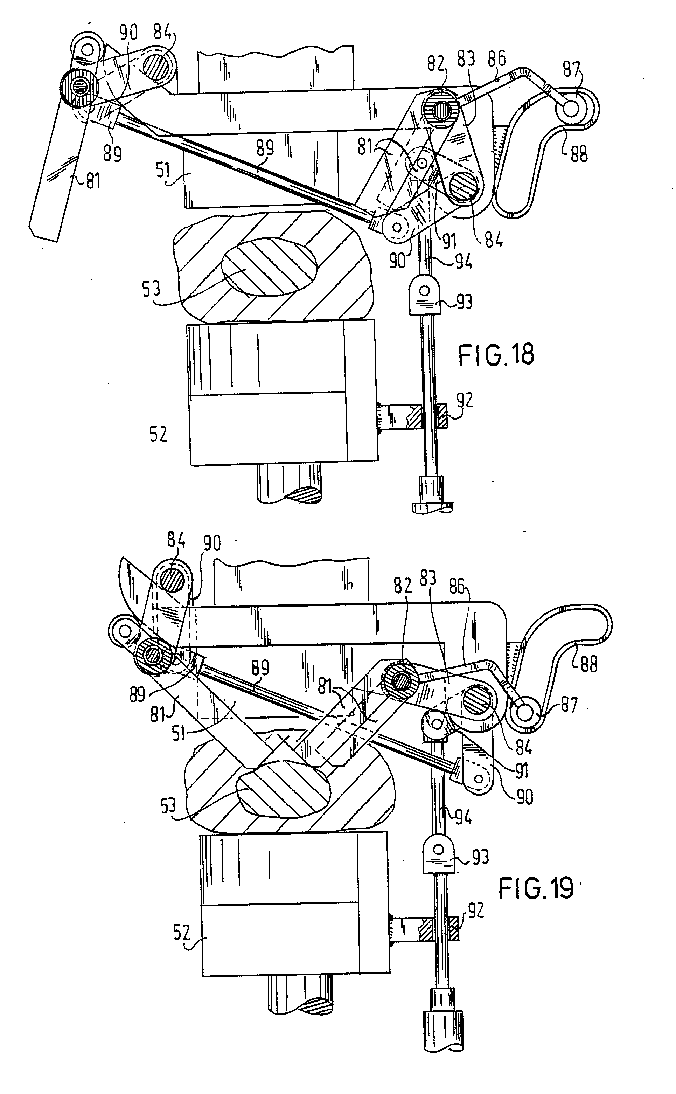

Assuming that the centering arms 81 are being in the first position as showed in fig. 17 and 19, said arms are protruding into the space between the lower and upper mould 52 and 51 respectively. Assuming further that a piece of meat is placed upon the lower mould 52, the centering arms 81 will be stuck into the piece of meat, so that the end faces of the arms 81 will urge the bone 53 in the correct position with respect to the cavity in the mould. The centering action of the arms 81 will be ameliorated by the particular position of the end faces including a certain angle $\alpha$ with respect to eachother.

When raising the lower mould 52 further the pressing action of the arms 81 upon the bone will be heightened too. The pressing action will continue up to the moment when a bracket 92 fastened to the mould 52 will reach a stop member 93 of a driving rod 94, which is fastened to the crank 91 of the driving shaft 84. At that moment any further raising of the lower mould 52 will push the rod 94 upwards and so turn the shaft 84 in clockwise direction as the pair of levers 83 accordingly. The arms 81 will be retracted so, whereas the retracting movement is guided by the roller 87 in the cam-track 88.

The opposite arms 81 at the left side in fig. 19 are also retracted, whilst the driving shaft 84 is turned clockwise also by means of the linkage 89.

The arms 81 will be brought in the retracted second position, according to fig. 18 so the lower mould 52 can reach the upper mould undisturbed by the arms 81. For cutting the piece of meat the moulds are in the position of for instance fig. 8.

When removing the piece of meat and the bone cutted out, another piece of meat may be inserted as soon as the lower mould 52 is again in the position of fig. 18. Thereupon the rod 94 can be lowered by a suitable driving means, for instance a hydraulic cilinder 95, so bringing the arms 81 into the first position of fig. 19.

Within the scope of the invention it will be clear that the protruding arms may have any suitable form, wherein it is just necessary that the end faces thereof are positioned so that the urging action is directed to the lower mould 52 in order to have the bone centered accurately.

## Claims

1. A device for boning pieces of meat, such as shoulder or rib pieces, legs of poultry and the like comprising a lower element (2, 51) and an upper element (3, 52) adapted to move away from and towards one another, one of which or both having a cavity for receiving a bone portion and comprising severing means for severing the meat from the bone portion characterized in that in the bottom of the or each cavity is arranged one or more members (60) adapted to be displaced in the direction of movement of the elements (2, 3) against an elastic force.

2. A device as claimed in claim 1,characterized in that said members are formed by a plurality of pins.

3. A device as claimed in claim 1, characterized in that said members have the shape of stamps (61, 62).

4. A device as claimed in claim 1 to 3 characterized in that said members are supported by a diaphragm (65) of a chamber (66) filled with a high-pressure fluid.

5. A device as claimed in anyone of the preceding claims 1 to 4 characterized in that the or each cavity has a stepped inner wall.

6. A device for boning pieces of meat, such as shoulder or rib pieces, legs of poultry and the like comprising a lower element (2, 51) and an upper element (3, 52) adapted to move away from and towards one another, one of which or both having a cavity for receiving a bone portion and comprising severing means for severing the meat from the bone portion characterized in that the cavity is filled with a deformable mass.

7. A device as claimed in claim 6, characterized in that said mass is formed by one or more layers of elastic material (57) for example, rubber.

8. A device as claimed in claims 6 or 7 characterized in that one or more layers is perforated (58).

9. A device as claimed in any one of the preceding claims 1 to 8 characterized in that an element has a continuous severing ridge (4, 70) directed towards the opposite element.

10. A device as claimed in anyone of the preceding claims 1 to 9, characterized in that each element has a severing edge (72) included in the deformable mass.

11. A device as claimed in claim 10, characterized in that an element (73) has the shape of a strip having a severing edge (72) and being fastened on the side remote from the severing edge to a supporting plate (74) arranged between the elastic layers.

12. A device as claimed in claim 10 or 11, characterized in that the severing edge (72) has a curved shape, viewed in the direction of cutting and/or at right angles thereto.

13. A device as claimed in anyone of the preceding claims, characterized in that a centering means (80) is provided at opposite sides of the elements (51, 52) sais centering means (80) is adapted to be moved into a first position, wherein means are protruding in the space between the elements, and vice versa into a second position, wherein said means are retracted so clearing said space.

14. A device as claimed in claim 13, characterized in that centering means are formed with movable arms (81) arranged in two groups opposite to each other.

15. A device as claimed in claim 13 or 14, characterized in that in said first position of said opposite arms (81) the end faces thereof are positioned under a certain angle $\alpha$ to eachother.

16. A device as claimed in claims 14 or 15, characterized in that in that the movement of said arms (81) from said first position to said second position is controlled by the approaching movement of the elements.

FIG.1

FIG. 2

FIG. 4

FIG.3

FIG.5

FIG.7

FIG.13

FIG.14   FIG.15

FIG.6

FIG.16

FIG.8

FIG.9

FIG.10

FIG.11

FIG.12

FIG.17

FIG.18

FIG.19

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,A | EP-A-0 070 605 (PROTECON) <br> * Whole document * <br> --- | 1,5,6,9 | A 22 C 17/04 |
| A | US-A-2 897 536 (BERGSTROM) <br> ----- | | |

TECHNICAL FIELDS SEARCHED (Int. Cl.4)

A 22 C

The present search report has been drawn up for all claims

| Place of search | Date of completion of the search | Examiner |
|---|---|---|
| THE HAGUE | 22-03-1988 | DE LAMEILLIEURE D. |

EPO FORM 1503 03.82 (P0401)